# DEMANDE DE BREVET EUROPEEN

(11) **EP 1 475 359 A1**
(43) Date de publication de la demande: **10.11.2004**
(21) Numéro de dépôt: 04291126.3
(22) Date de dépôt: 03.05.2004
(51) Int. Cl.: C03C 17/00, C03C 17/28

(54) **Procédé de dépôt de revêtement sur une glace de dispositif d'éclairage et/ou de signalisation pour véhicule automobile**

(30) Priorité: 06.05.2003 FR 0305533
(71) Demandeur: VALEO VISION, 93012 Bobigny Cédex (FR)
(72) Inventeur: Teba, Daniel, 23600 Martos (ES); Stary, Didier, 75013 Paris (FR); Acuna-Cueva, Rocio, 23700 Linares (Jaen) (ES)
(74) Mandataire: Renous Chan, Véronique

(57) **Abrégé**

L'invention a notamment pour objet un procédé de dépôt d'un revêtement à base de polymère(s) sur l'une au moins des faces (2,3), notamment la face interne (2), d'une glace (1) destinée à équiper des dispositifs d'éclairage et/ou de signalisation de véhicule automobile. Ledit procédé comprend au moins une étape de dépôt (a) par écoulement d'une solution (10) contenant le(s) précurseur(s) du(des) polymère(s) à la surface de ladite face (2,3).

## Description

La présente invention a pour objet un procédé de dépôt de revêtement sur une glace de dispositif d'éclairage et/ou de signalisation pour véhicule automobile, du type feu de signalisation ou projecteur. Par soucis de concision, on ne mentionnera que le terme de « projecteur » par la suite pour les désigner.

Il est connu de déposer des revêtements sur la face externe de la glace du projecteur (celle qui est destinée à être tournée vers l'extérieur du projecteur), tout particulièrement pour la protéger mécaniquement : la glace doit en effet pouvoir résister, notamment, à des projections de gravillons.

Il est également connu de déposer des revêtements sur la face interne du projecteur (celle qui est destinée à être tournée vers l'intérieur du projecteur), tout particulièrement pour lui conférer des propriétés anti-condensation : ces revêtements sont généralement de type hydrophiles ou à la fois hydrophiles et hydrophobes.

Dans un cas comme dans l'autre, il s'agit de revêtements à base de polymère(s), par exemple du type polyuréthanes, polyacryliques, polysilicones modifiés ou non.

Différents types de procédés de dépôt existent. Le plus courant est le dépôt à l'aide d'un spray, qui projette sur la surface à traiter un nuage de microgouttelettes de la solution contenant les précurseurs/réactifs, qui durciront/réticuleront par un traitement thermique postérieur de la glace. Un tel mode de dépôt présente un certain nombre d'inconvénients. La maîtrise de l'épaisseur du revêtement est délicate. On a donc des tolérances de variation d'épaisseur d'un point à l'autre d'une zone de la glace à traiter très élevées, et, pour s'assurer que toute la zone à traiter aura une épaisseur de revêtement suffisante pour jouer son rôle anti-scratch ou anti-condensation, il est nécessaire d'utiliser des quantités de solution réactive anormalement importantes, le rendement du procédé n'étant donc pas très bon. Par ailleurs, un dépôt par spray ne permet pas d'obtenir un aspect final optimal du revêtement : il ne présente pas toujours l'aspect lisse recherché. Enfin, ce mode de dépôt nécessite généralement le recours à des systèmes de masque, de façon à éviter des dépôts intempestifs sur les rebords ou la périphérie de la face opposée à la face où le dépôt doit s'effectuer, et le recours à des outillages spécifiques pour chaque modèle de glace.

L'invention a donc pour but de remédier à ces inconvénients, en mettant notamment au point un nouveau type de procédé de dépôt pour ce type de revêtement qui permette de mieux maîtriser l'épaisseur des revêtements déposés, d'améliorer leur aspect, d'améliorer le rendement du dépôt, tout en étant de mise en oeuvre simple et industrialisable.

L'invention a tout d'abord pour objet un procédé de dépôt d'un revêtement à base de polymère(s) sur l'une au moins des faces, notamment la face interne, d'une glace destinée à équiper des dispositifs d'éclairage et/ou de signalisation de véhicule automobile, ledit procédé comprenant au moins une étape de dépôt (a) par écoulement d'une solution contenant le(s) précurseur(s) du(des) polymère(s) à la surface de ladite face.

(On entend par « précurseurs » les précurseurs, réactifs, pré-polymères, polymères éventuellement non ou partiellement réticulés, éventuellement associés à des additifs et qui, éventuellement après un traitement de type thermique, deviendront les composants du revêtement final.)

Plutôt qu'un spray, l'invention propose donc un dépôt par écoulement, ce qui conduit à de multiples avantages : on n'a plus besoin de masques, puisqu'il est beaucoup plus facile de diriger l'écoulement de façon à limiter toutes les déperditions de solutions ailleurs que dans les zones à traiter. On contrôle aussi beaucoup mieux l'épaisseur du revêtement final. Avec un revêtement plus homogène en épaisseur, on peut alors se permettre de déposer uniquement l'épaisseur vraiment nécessaire de revêtement, ce qui entraîne des gains de rendement significatifs. Ainsi, pour un revêtement de type anti-condensation en face interne, il est possible, notamment pour un revêtement à base de polyacrylique, de se contenter d'épaisseurs très faibles, par exemple de l'ordre de 2 microns. Avec un procédé par spray, on aurait du prévoir une épaisseur moyenne bien supérieure, pour garantir cette épaisseur minimale sur toute la face interne, ce qui n'est plus nécessaire avec le procédé de l'invention. Un procédé par écoulement d'un rideau continu de solution ne donnerait pas non plus satisfaction, avec un risque d'accumulation de solution à l'intérieur de la face interne de la glace, généralement convexe de façon plus ou moins prononcée. En outre, avec un procédé d'écoulement par rideau, on ne peut pas déposer des revêtements sur des glaces de dimensions réduites. Avoir une épaisseur plus homogène/plus réduite est tout particulièrement important pour les revêtements qui se situent en face interne : en effet, c'est en face interne que la glace peut présenter des reliefs du type stries, nervures, à rôle optique vis-à-vis du faisceau lumineux émis par le projecteur ou à rôle simplement esthétique. Or, des revêtements irréguliers, trop épais par endroits, ne « suivent » pas ces reliefs, et ont plutôt tendance à les atténuer, à les modifier. Avec le procédé de l'invention, on calcule au plus juste l'épaisseur du revêtement, qui va pouvoir suivre nettement plus fidèlement les reliefs éventuels.

Avantageusement, le procédé de l'invention comprend également au moins une étape (b) d'égouttage de la glace pendant et/ou après une étape de dépôt (a), notamment en vue du recyclage de la solution non retenue à la surface de la glace. Le recyclage de la solution qui n'a pas adhéré à la surface de la glace est aisé : le jet de solution est plus facile à cibler que dans le cas d'un spray, la quantité de solution à recycler est moindre et plus facile à recueillir, par exemple simplement sous l'effet de la gravité, dans un moyen collecteur de dimensions réduites. Ceci est très avantageux, tout particulièrement quand la solution, une fois préparée, doit être utilisée dans un laps de temps réduit, de quelques heures par exemple. La réintroduction de la solution recyclée dans le réservoir de solution non encore utilisée peut nécessiter un traitement éventuel intermédiaire de celle-ci.

Avantageusement, le procédé selon l'invention comprend également au moins une étape de traitement thermique ou de rayonnement du type IR ou UV, notamment une étape (c) d'élimination du solvant de la solution et une étape (d) de durcissement/réticulation/polymérisation du (des) précurseur(s) de la solution.

Comme mentionné plus haut, l'invention est tout particulièrement adaptée au dépôt de revêtements sur la face interne de la glace en vue, notamment de lui conférer des propriétés anti-condensation. C'est dans cette application que la finesse du revêtement et/ou son homogénéité d'épaisseur se révèlent généralement les plus utiles.

Selon un premier mode de réalisation, lors de l'étape (a) de dépôt, on projette sur la face de la glace à traiter un jet de solution de façon continue ou intermittente, en maintenant le positionnement du jet substantiellement fixe, la glace étant mise en mouvement en regard dudit jet. Avantageusement, elle est, lors du dépôt, verticale, sensiblement verticale ou oblique par rapport à l'horizontale. Ainsi, l'évacuation de l'excès de solution s'évacuera facilement sous le simple effet de la gravité. On peut aussi envisager un dépôt sur une glace horizontale, mais il faut alors prévoir un basculement de la glace une fois le dépôt terminé pour permettre l'évacuation de l'excès de solution, ou trouver tout moyen équivalent pour arriver au même résultat. Comme cela sera détaillé plus loin, on peut prévoir des moyens de préhension de la glace, qui sont montés mobiles et qui, lors de la phase de dépôt, décrivent un mouvement par rapport au jet de façon appropriée, ce mouvement pouvant avantageusement être piloté par des moyens informatiques/électroniques : lorsqu'on change de modèle de glace, il suffit de reprogrammer le mouvement en conséquence, sans avoir à changer d'outillages, ce qui est très souple et économique sur le plan industriel.

Selon un autre mode de réalisation, lors de l'étape (a) de dépôt, on projette sur la face de la glace à traiter par un dispositif de type buse un jet de solution de façon continue ou intermittente, en maintenant le positionnement de la glace substantiellement fixe, la buse étant mise en mouvement en regard de ladite glace. Là encore, il n'y a pas de changement d'outillages d'un modèle de glace à un autre, mais simple reprogrammation du mouvement de la buse, qui peut lui aussi être piloté informatiquement/électroniquement.

De préférence, on sélectionne la viscosité de la solution utilisée lors de la phase (a) de dépôt, notamment quand le revêtement est à base de polymère(s) acrylique(s) dans une gamme comprise entre 6 centipoises et 20 centipoises, notamment comprise entre 8 centipoises et 14 centipoises. (Les mesures de viscosité s'effectuent au viscosimètre Brooke Field à une vitesse de rotation d'environ 20 tours par minute avec une aiguille de type R2). On a tendance à utiliser des solutions plus fluides qu'en spray, la viscosité de la solution, liée à son taux de dilution, étant l'un des paramètres permettant de sélectionner l'épaisseur du revêtement final.

De préférence, l'étape de dépôt (a) par écoulement d'une solution se fait par projection d'un jet de solution ayant une largeur d'au plus 5 cm, notamment d'au plus 1 cm, de préférence comprise entre 2 et 10 mm. On a donc affaire à un « pinceau » très focalisé, ce qui permet notamment d'atteindre des zones difficiles d'accès : les glaces présentent usuellement une zone centrale et des zones latérales parfois désignées par le terme de « jupe » et qui sont d'une courbure plus prononcée que la zone centrale. En face interne, ce type de buse permet de projeter sans difficultés la solution dans les zones de transition/les coins délimitant la zone centrale par rapport aux zones latérales.

Avantageusement, le dépôt du revêtement de type anti-condensation sur la face interne de la glace par écoulement d'une solution, comme décrit plus haut, est précédé ou suivi du dépôt d'un revêtement de type protection mécanique sur la face externe de la glace, par un procédé similaire ou par un procédé par pulvérisation ou par un procédé de type écoulement-rideau. Quand la glace doit être munie d'une pluralité de revêtements, on peut sélectionner selon le type de revêtement le procédé le plus approprié. On peut appliquer l'invention aux revêtements des faces internes et externes. On peut aussi la réserver aux revêtements en face interne, et utiliser des procédés moins précis pour des revêtements plus épais/ aux matières premières moins coûteuses en face externe par exemple. Un procédé de type écoulement rideau, où les glaces se déplacent sur un support convoyeur à travers un rideau de solution évite une manipulation des glaces une par une lors du dépôt. En revanche, il tend à augmenter les déperditions en solution, peut nécessiter à nouveau l'utilisation de masques et est surtout adapté aux revêtements d'épaisseur significative, par exemple d'au moins 5 micromètres, et aux surfaces de dépôt d'accès facile.

L'invention a également pour objet le dispositif de mise en oeuvre du procédé décrit plus haut, et notamment un dispositif comprenant au moins un moyen de saisie et de maintien des glaces du type dispositif à ventouses, un moyen de projection d'un jet de solution du type buse relié à au moins un réservoir de solution (notamment un réservoir principal de solution non encore utilisée éventuellement associé à un réservoir de recyclage de solution), le mouvement relatif de la glace par rapport au jet de solution lors de l'étape (a) de dépôt étant piloté automatiquement par des moyens informatiques/électroniques.

De préférence, le dispositif comprend au moins un moyen de collecte/recyclage de solution projetée par la buse.

L'invention a également pour objet une glace pour équiper des dispositifs d'éclairage et/ou signalisation pour véhicules automobile, notamment traitée selon le procédé décrit plus haut ou avec le dispositif décrit plus haut, et qui est telle que tout ou partie de sa face interne est couverte par un revêtement de type anti-condensation dont l'épaisseur moyenne est comprise entre 0,5 et 12 micromètres, notamment entre 1 et 4 micromètres, notamment entre 1 et 3 micromètres, notamment inférieure ou égale à 8 micromètres ou inférieure à 2 micromètres. Notamment pour un revêtement en face interne, une gamme d'épaisseur préférée se situe entre 0,5 et 1,5 micromètre.

Alternativement ou cumulativement, cette glace est telle que tout ou partie de sa face interne est couverte par un revêtement de type anti-condensation dont l'épaisseur est uniforme, avec une tolérance de variation d'au plus 40%, notamment d'au plus 30% (voire même entre 10 et 20%, notamment pour les revêtements déposés en face externe, par exemple à fonction de protection mécanique et généralement plus épais que les revêtements de face interne du type anti-buée). Pour donner un ordre de grandeur, les tolérances de variation d'épaisseur couramment obtenues avec des procédés de type spray sont plutôt de 100 ou 200 %.

Sa face interne peut être munie de reliefs du type stries, nervures. Bien sûr, l'invention s'applique de la même façon à des glaces lisses.

Un type de revêtement préféré selon l'invention est à base de polymère(s) acrylique(s), notamment fonctionnalisés.

L'invention a également pour objet le dispositif d'éclairage et/ou signalisation pour véhicule automobile équipé de ce type de glace, ainsi que le véhicule automobile muni d'un tel dispositif.

L'invention sera détaillée ci-après avec des exemples non limitatifs, à l'aide des figures suivantes :
- **fig. 1 :** une représentation schématique d'un procédé par spray selon l'art antérieur
- **fig. 2 et 3 :** des représentations schématiques de deux étapes du procédé de dépôt selon l'invention

Toutes les figures sont extrêmement schématiques, et ne respectent pas nécessairement l'échelle.

L'exemple de réalisation décrit ici, de façon non limitative, concerne le dépôt d'un revêtement anti-condensation ayant des propriétés hydrophiles et hydrophobes que l'on veut déposer sur la face interne d'une glace. Le revêtement est à base de polymère(s) acrylique(s), il est par exemple du type décrit dans le brevet EP 339 909 ou appartenant à la gamme de produits commercialisée par la société NOF sous l'appellation « Modiper H Series ». Avec ce type de vernis, une épaisseur de 1 ou 2 microns peut suffire à garantir la fonctionnalité recherchée.

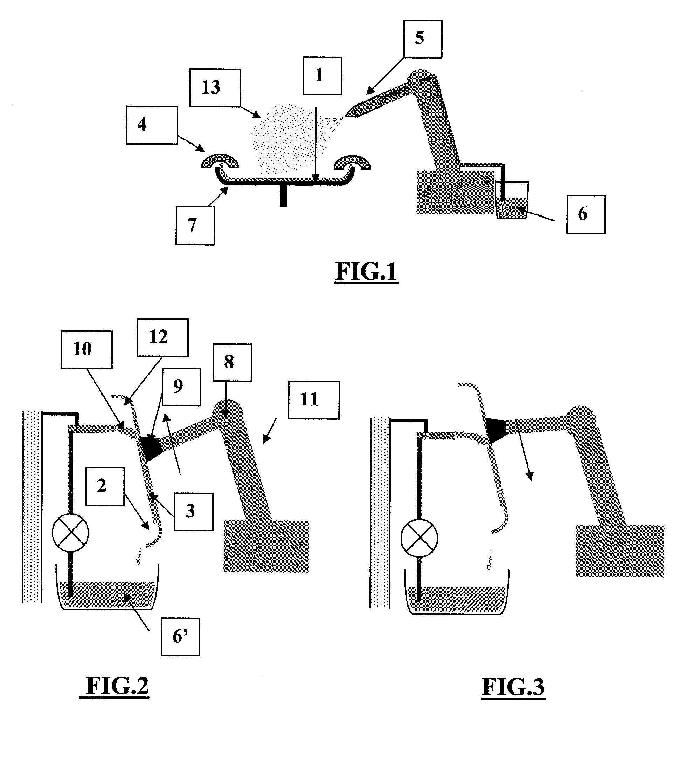

La figure 1 représente le procédé selon l'art antérieur : un procédé de dépôt par spray. On y voit la glace 1, avec une face interne 2 et une face externe 3 (ces références sont indiquées en figure 2, qui représente la même glace traitée selon l'invention), la zone centrale étant délimitée par rapport aux zones latérales convexes par des zones de transition 12 aux arêtes plus ou moins aigues suivant les modèles de glace. La glace est supportée par un gabarit 7, dont la surface d'appui de la glace a une forme complémentaire à celle de la surface externe 3 de la glace 1. Ce gabarit 7 est également muni de masque(s) 4, qui permettent d'éviter la projection de solution réactive sur le bord extrême de la face interne 2 de la glace , ainsi que sur son chant et sur le bord de la face externe 3 de celle-ci (et sur les outillages). La solution réactive est pulvérisée à l'aide d'un spray 5 venant puiser dans un réservoir de solution 6 en direction de la face interne 2 de la glace. On comprend que le nuage de gouttelettes 13 généré par le spray engendre des déperditions de solution, donc un rendement matière de vernis médiocre. En outre, il faut modifier gabarit et masque à chaque changement de modèle de glace. Enfin, pour être sûr que le revêtement sera bien de 2 micromètres d'épaisseur, on prévoit généralement d'en déposer nettement plus : on aura ainsi des zones de la face interne 2 qui pourront avoir facilement une épaisseur au moins deux fois supérieure à une valeur cible de par exemple 2 micromètres. Enfin, on voit fréquemment à l'oeil nu des irrégularités de surface du revêtement final, ce qui est inesthétique.

Le procédé selon l'invention est représenté aux figures 2 et 3. La solution active est prélevée d'un un réservoir de solution active 6' (qui est en fait le réservoir de récupération d'excès de solution) et/ou d'une alimentation à partir d'un contenant de solution non représenté. On utilise un dispositif à ventouses 11 qui est apte à saisir une par une les glaces 1 et à les amener à proximité de la buse 9. Le bras 8 articulé du dispositif à ventouses est mobile et piloté par des moyens informatiques/électroniques. L'étape de dépôt (a) se déroule de la façon suivante :
- le bras 8 vient saisir la glace 1, puis l'amène en regard de la buse 9, dans une position sensiblement verticale ou oblique par rapport à la verticale,
- la buse projette un « pinceau » 10 de solution prélevée du réservoir 6' d'environ 4 mm de large, avec un débit, une viscosité, une dilution appropriés, ledit jet 10 étant projeté en sortie de buse selon un axe sensiblement horizontal. La distance entre la buse 9 et la face interne 2 est étudiée de façon à ce que le pinceau de solution frappe un point d'impact initial de la glace en partie supérieure
- puis le bras 8 effectue un mouvement programmé qui permet au jet 10 de balayer l'ensemble de la surface de la face 2 à traiter. Ce mouvement peut être une combinaison de translation(s) et de rotation(s). La figure 3 montre une position relative entre glace et buse différente, le bras 8 ayant effectué une translation par rapport à la figure 2 selon le plan d'inclinaison de la glace 1 par rapport à la verticale. On peut envisager que le pinceau ne balaye pas toute la surface à traiter, notamment pas une zone inférieure, la solution 10 étant mise en contact avec cette zone par écoulement de l'excès de solution projetée en zone supérieure.
   Le jet de solution 10 est suffisamment étroit pour permettre d'atteindre tous les « coins », c'est-à-dire les zones qui se situent notamment à la jonction 12 entre la partie centrale et les parties latérales de la glace.
- une fois que le pinceau a fini de balayer la face interne 2, le bras 8 éloigne la glace du pinceau et/ou le jet de solution est interrompu, on laisse alors la glace éventuellement quelques secondes/minutes au dessus du réservoir 6' pour collecter l'excès de solution s'écoulant le long de la face 2 par simple gravité (tout autre moyen de collecte de cet excès de solution peut aussi être utilisé, comme tout réservoir indépendant du réservoir principal 6', avec un système de réintroduction de cet excès de solution dans le réservoir principal).
- ensuite, on libère le poste pour que soit traitée la glace suivante, la glace munie de la solution est acheminée vers une station d'égouttage pour plusieurs minutes de préférence, pour achever l'évacuation de l'excès de solution (toujours avec un système de récupération de la solution)
- enfin, de façon connue, on fait subir à la glace un premier traitement thermique à une température de l'ordre de 50°C pendant quelques minutes pour éliminer le solvant (par exemple du méthoxy propanol), puis un second traitement thermique vers 140°C pour une durée d'environ 30 minutes à une heure destiné à durcir le revêtement.

Avec ce procédé, on obtient un revêtement qui, pour une épaisseur cible de 1 micromètres, présente par exemple des variations d'épaisseur entre 0.8 et 1.4 micromètres, ce qui constitue un résultat bien meilleur que celui obtenu avec un procédé spray. En outre, l'aspect final du revêtement est très bon : pas ou très peu de défauts visuels du type piqûres visibles ou « peau d'orange ».

## Revendications

1. Procédé de dépôt d'un revêtement à base de polymère(s) sur l'une au moins des faces (2,3), notamment la face interne (2), d'une glace (1) destinée à équiper des dispositifs d'éclairage et/ou de signalisation de véhicule automobile, **caractérisé en ce que** ledit procédé comprend au moins une étape de dépôt (a) par écoulement d'une solution (10) contenant le(s) précurseur(s) du(des) polymère(s) à la surface de ladite face (2,3).

2. Procédé selon la revendication 1, **caractérisé en ce qu'**il comprend également au moins une étape (b) d'égouttage de la glace (1) pendant et/ou après une étape de dépôt (a), notamment en vue du recyclage de la solution non retenue à la surface de la glace.

3. Procédé selon l'une des revendications précédentes, **caractérisé en ce qu'**il comprend également au moins une étape de traitement thermique ou de rayonnement du type IR ou UV, notamment une étape (c) d'élimination du solvant de la solution et une étape (d) de durcissement/réticulation/polymérisation du (des) précurseur(s) de la solution.

4. Procédé selon l'une des revendications précédentes, **caractérisé en ce qu'**on dépose le revêtement sur la face interne (2) de la glace (1) en vue de lui conférer des propriétés anti-condensation.

5. Procédé selon l'une des revendications précédentes, **caractérisé en ce que**, lors de l'étape (a) de dépôt, on projette sur la face (2) de la glace (1) à traiter un jet de solution (10) de façon continue ou intermittente, en maintenant le positionnement du jet substantiellement fixe, la glace (1) étant mise en mouvement en regard dudit jet (10).

6. Procédé selon l'une des revendications précédentes, **caractérisé en ce que**, lors de l'étape (a) de dépôt, on projette sur la face(2) de la glace (1) à traiter par un dispositif de type buse (9) un jet de solution (10) de façon continue ou intermittente, en maintenant le positionnement de la glace (1) substantiellement fixe, la buse (9) étant mise en mouvement en regard de ladite glace (1).

7. Procédé selon l'une des revendications précédentes, **caractérisé en ce qu'**on sélectionne la viscosité de la solution utilisée lors de la phase (a) de dépôt dans une gamme comprise entre 6 centipoises et 20 centipoises, notamment comprise entre 8 centipoises et 14 centipoises.

8. Procédé selon l'une des revendications précédentes, **caractérisé en ce que** l'étape de dépôt (a) par écoulement d'une solution se fait par projection d'un jet de solution (10) ayant une largeur d'au plus 5 cm, notamment d'au plus 1 cm, de préférence comprise entre 2 et 10 mm.

9. Procédé selon l'une des revendications précédentes, **caractérisé en ce que** le dépôt du revêtement de type anti-condensation sur la face interne (2) de la glace (1) par écoulement d'une solution est précédé ou suivi du dépôt d'un revêtement de type protection mécanique sur la face externe (3) de la glace, par un procédé similaire ou par un procédé par pulvérisation ou par un procédé de type écoulement-rideau.

10. Dispositif de mise en oeuvre du procédé selon l'une des revendications précédentes, **caractérisé en ce qu'**il comprend au moins un moyen (11) de saisie et de maintien des glaces (1) du type dispositif à ventouses, un moyen de projection d'un jet de solution (10) du type buse (9) relié à au moins un réservoir de solution (6'), le mouvement relatif de la glace (1) par rapport au jet de solution (10) lors de l'étape (a) de dépôt étant piloté automatiquement par des moyens informatiques/électroniques.

11. Dispositif selon la revendication 10, **caractérisé en ce qu'**il comprend au moins un moyen de collecte/recyclage de solution projetée par la buse (9).

12. Glace (1) pour équiper des dispositifs d'éclairage et/ou signalisation pour véhicules automobile, notamment traitée selon le procédé conforme à l'une des revendications 1 à 9 ou avec le dispositif selon l'une des revendications 10 ou 11, **caractérisé en ce que** tout ou partie de sa face interne (2) est couverte par un revêtement de type anti-condensation dont l'épaisseur moyenne est comprise entre 0,5 et 12 micromètres, notamment entre 1 et 4 micromètres, notamment entre 1 et 3 micromètres, notamment inférieure à 2 micromètres.

13. Glace (1) pour équiper des dispositifs d'éclairage et/ou signalisation pour véhicules automobile, notamment traitée selon le procédé conforme à l'une des revendications 1 à 9 ou avec le dispositif selon l'une des revendications 10 ou 11, **caractérisé en ce que** tout ou partie de sa face interne (2) est couverte par un revêtement de type anti-condensation dont l'épaisseur est uniforme, avec une tolérance de variation d'au plus 30%.

14. Glace (1) selon l'une des revendications 12 ou 13, **caractérisé en ce que** sa face interne (2) est munie de reliefs du type stries, nervures.

15. Glace selon l'une des revendications 12 à 14, **caractérisé en ce que** le revêtement est à base de polymère(s) acrylique(s).

16. Dispositif d'éclairage et/ou de signalisation pour véhicule automobile, **caractérisé en ce qu'**il comprend une glace (1) traitée selon le procédé conforme à l'une des revendications 1 à 9 ou avec le dispositif selon l'une des revendications 10 ou 11, ou une glace conforme à l'une des revendications 12 à 15.
